# EUROPEAN PATENT SPECIFICATION

(11) **EP 4 433 397 B1**
(45) Date of publication and mention of the grant of the patent: **26.03.2025**
(21) Application number: 23723674.0
(22) Date of filing: 08.05.2023
(51) Int. Cl.: B65G 57/30

(54) **LIFTING DEVICE FOR EGG TRAYS**
HEBEVORRICHTUNG FÜR EIERTRAGPLATTEN
DISPOSITIF DE LEVAGE POUR PLATEAUX À OEUFS

(30) Priority: 06.05.2022 NL 2031794
(43) Date of publication of application: 25.09.2024
(73) Proprietor: Hedipack Technology Beheer B.V., 6971 LG Brummen (NL)
(72) Inventor: GROOTHERDER, Berend Derk, 6971 LG Brummen (NL)
(74) Representative: Algemeen Octrooi- en Merkenbureau B.V.
(86) International application number: PCT/NL2023/050246
(87) International publication number: WO 2023/214879

(56) References cited:
- KR-B1- 101 951 299
- US-A1- 2002 050 672

## Description

The present invention relates to a lifting device for the gripping on the underside and carrying of egg trays.

Egg trays are available in various types and sizes. A widely used form is an egg tray in which eggs are, or at least should be, packed in a matrix pattern of five rows and six columns. Thirty cups in which the eggs are, or at least should be, placed are formed as cups with a shape that is midway between an inverted truncated pyramid and an inverted dome. The device according to the present invention has been developed in particular for an egg tray of this kind. It ought to be clear, however, that other shapes of egg trays, for example with a matrix of four by five columns, may also be processed with a device according to the invention, as also occurs with known devices. That is possible because the orientation and the distance apart of the eggs in most cases, even with egg trays that are not square but are for example rectangular, coincides with that in the familiar square five by six egg tray.

Between two cups of an egg tray located diagonally next to each other there is always a raised portion in the form of a relatively pointed, truncated pyramid, with sides formed somewhat hollow. By rotating two egg trays stacked, or at least to be stacked, on one another, through 90 degrees about a vertical axis, ribs positioned between the cups of the upper of the two egg trays are located above the raised portions of the lower of the two egg trays. Thus, egg trays filled with eggs can be stacked on each other, wherein sufficient space and protection against breakage are provided for fragile eggshells by the two egg trays, at least for the lower of the two egg trays. Stacks of six filled egg trays are usual, but other numbers of egg trays may also be stacked on each other. Often a stack of filled egg trays is protected at the top by an empty egg tray.

It is known to stack the egg trays on each other from the top, but it is also known to form a stack by supplying an egg tray at the bottom every time, a stack so formed, or at least to be formed, always being moved upward a certain amount. The present invention relates to the last-mentioned method.

Filled egg trays to be stacked are usually transported on a supply conveyor, such as an endless belt, to a receiving device positioned under a stacking location of a stacking device. The egg tray is raised from the receiving device by a platform. The platform is provided with a profile with upward-projecting projections, which fit into raised portions of the egg trays. In this way it is possible to ensure that the projections of the egg tray are aligned well relative to the cups of an upper egg tray. Finally the projections of the egg tray engage with cups of a superjacent egg tray and the stack is optionally turned by a defined amount and put back again at the stacking location. This is done as often as required until a desired number of layers is reached (it should be clear that the first (top) egg tray cannot engage on an upper egg tray, but that is not important for the movement). To ensure that two egg trays located one above another are oriented correctly relative to each other, at the stacking location between two successively supplied egg trays the stack is always turned 90 degrees, or the platform with the egg tray is turned 90 degrees every other time during the raising operation. In this last case, the platform should be turned back again in the movement to the receiving device for proper engagement of the next egg tray.

KR 101 951 299 B1 discloses a lifting device according to the preamble of claim 1.

The present invention aims to provide a lifting device wherein a more regular pattern of movements and/or fewer movements are necessary than with the known lifting devices. This is achieved according to the present invention by configuring a lifting device according to claim 1.

The two alternative platforms, a) with upward-projecting projections and b) with holes extending through the platform or blind holes, work per se in the same way. Further, The conical shape of platforms according to alternative a) provides, between the projections, a suitable receiving space for cups of an egg tray to be carried. In platforms according to alternative b), the cups of the egg trays are received with sufficient support in the holes of the platform.

The projections engage on the ribs of an egg tray that are positioned between the cups of the egg tray, but also between the raised portions. However, on account of the patterns of the projections and the holes, the projections and holes are located at the same place when one of the two is turned 90 degrees every time about a vertical. Since a platform according to the invention is turned exactly 90 degrees between two lifting movements, the action of the two alternatives is identical.

Egg trays are available in various types and sizes. A widely used form is a square egg tray in which eggs are, or at least should be, packed in a matrix pattern of five rows and six columns. The cups in which the eggs are, or at least should be, placed are formed as cups with a shape that is midway between an inverted truncated cone and an inverted dome. The device according to the present invention has been developed in particular for an egg tray of this kind. It should, however, be clear that other shapes of egg trays may also be processed with a device according to the invention, which also occurs with known devices. That is possible because the orientation and the distance apart of the eggs in most cases, even with egg trays that are not square but are for example rectangular, coincides with that in the known square five by six egg tray.

The inventor has discovered that a platform according to the present invention is suitable for engaging on an egg tray from below in two orientations turned 90 degrees relative to each other, wherein always half of the projections engage on the underside of the egg tray, or wherein always half of the holes engage on a recess of the egg tray. Thus, in the cycle described above, the platform with an egg tray can be raised, and between the engagement of the egg tray on the upper egg tray and the depositing of the stack of egg trays at the stacking location they are turned 90 degrees about a (virtual) vertical rotation axis, wherein the platform does not need to be turned back to the original orientation to engage a subsequently supplied egg tray and raise it. It is alternatively also possible to supply egg trays that are turned 90 degrees relative to each other every time and engage on them successively without needing to turn the platform. In both situations, an identical sequence of operations is carried out in each cycle, whereas in the prior art, in successive cycles the platform need not be turned on one occasion, and in the next cycle must be turned to and fro. Thus, the aim of the invention is achieved.

It should be noted that in the case of a platform with upward-extending projections, the projections do not come into contact with a recess of an egg tray that is placed on the platform; it is a number of bridges or ribs, but not all bridges/ribs, between two adjacent cups of an egg tray, that rest on a projection during use. In the two positions of an egg tray turned 90 degrees relative to each other, it is thus always other projections that engage on bridges/ribs on the underside of an egg tray. This will be explained in more detail later in the description of the invention, referring to the drawing.

In a preferred embodiment of the present invention, the lifting device is configured for rotating the platform about a vertical axis, in particular through 90 degrees. The platform can turn a further 90 degrees every time in two successive cycles, or turn to and fro. With this embodiment, a stack of eggs with a supplied lower egg tray can be turned to make it suitable for engaging with a following egg tray from below, as already discussed above.

If the perimeter of the platform has a length and a width that are each smaller than 400 mm, the length and/or width of the platform is less than the length and the width of an egg tray; an edge of an egg tray located on the platform will project beyond the platform, so that the respective edge is free to be able to engage with it from below, for example on a carrying element on which the egg tray or a stack of egg trays is to be deposited by means of the lifting device. The length and/or the width of the platform is preferably less than 250 mm, and more preferably less than 220 mm.

When the platform is provided, on an upper side thereof, with upward-projecting projections, which are configured for being able to engage, in two positions turned 90 degrees about a vertical axis, with an underside of an egg tray that is to be carried, the platform does not need to turn back to an original position every time after it has turned 90 degrees in order to place an egg platform, turned a quarter turn, under an egg platform located above.

Likewise, when the platform is provided with holes extending through the platform or with blind holes, said holes extending through the platform or blind holes being configured for being able to receive, in two positions turned 90 degrees about a vertical axis, cups of an egg tray to be carried, the platform does not need to turn back to an initial position every time after it has turned 90 degrees in order to place an egg platform, turned a quarter turn, under an egg platform located above.

If the platform is rectangular, preferably square, it can extend parallel to the edges of an egg tray to be supported. However, other shapes, such as octagonal or round, are also conceivable for the platform and may be functional.

The projections or holes always form a pattern of the five of a dice. The distance apart of the outermost points is equal to that of the center distance of an egg tray to be engaged, to which reference is made in claim 1. In order to make the dimensions independent of an egg tray, which does not itself form part of the claimed invention (but is known as standard), it is preferred that the distance between two adjacent vertexes of said five of the dice is between 40 and 60 mm, preferably between 42 and 55 mm, and in particular is 48.3 mm. The center distance is admittedly related to the cups of a specific (five by six) egg tray, but it should be clear that said center distance in this document may be projected onto the platform, i.e. the platform is configured to receive an egg tray with said pattern.

To be able to carry an egg tray stably, it is preferred that a projection, preferably all projections, has/have a flat top surface that is horizontal during use.

To provide on the one hand good engagement of the egg tray and on the other hand to prevent contact of the platform with parts of an egg tray with which the platform should not come into contact, the base of a projection has a diameter from 20 to 40 mm, preferably from 25 to 35 mm, and more preferably of 28-32 mm.

It is preferred that the base of the projection has an oval shape. A platform may be used for egg trays with relatively large and relatively small cups. The oval shape at the underside of the projections, which may become round toward the top, may be used for engaging with the relatively wide sides of cups of the relatively small egg trays, and engaging with the relatively narrow side and centering of relatively large egg trays.

For on the one hand providing good engagement of the egg tray and on the other hand preventing contact of the platform with parts of an egg tray with which the platform should not come into contact, the height of a projection is between 7.5 and 15 mm, preferably between 10 and 14 mm, and in particular 13.75 mm.

Lifting device with holes as claimed in one or more of the preceding claims, wherein the holes have a round cross section, or are at least point-symmetric relative to a center of the respective hole. Said shape provides a suitable receiving space for cups of an egg tray to be carried,
So that the cups of the egg trays are received with sufficient support in the holes of the platform, it is preferred that the holes have a diameter of more than 25 mm, more preferably more than 30 or 35 mm.

For transmitting a drive to the platform of a lifting and optionally rotating motion, the lifting device preferably comprises an elongated lifting element extending vertically, provided on the underside of the platform.

In use, the invention relates to a lifting device with an egg tray thereon with a matrix pattern of X rows and Y cups, in each of which an egg is placed. The aim and advantages of the first aspect of the present invention.

For application with known shapes of egg trays it is preferred that X is 3, 4 or 5.

For application with known shapes of egg trays it is preferred that Y is 4, 5, or 6.

It is preferred that a recess is formed as a depression with substantially a shape of an inverted truncated pyramid, as a depression with substantially a shape of an inverted dome or an intermediate form thereof. Egg trays are generally known and the shape thereof is easily deduced.

It is preferred that in the case of a platform with upward-extending projections, cups of the egg tray, when used on a base surface of the platform located between the projections of the platform, are supported on the platform.

For good support of an egg tray on the platform, it is preferred that the base surface of the platform is flat, and more preferably extends horizontally.

The present invention is usable as the lifting device in a stacking device that is suitable for stacking substantially square egg trays, supplied, or at least to be supplied, by means of a supply conveyor in a supply transport direction under a stacking location, and to be discharged via a discharge conveyor in a discharge transport direction from the stacking location, comprising:
- a receiving device, configured for the successive receiving and carrying of egg trays filled with eggs delivered by the supply conveyor, said receiving device comprising a transit space that is suitable for moving a platform through it, and which is defined on at least two sides by first carrying elements, which, in use, carry edges of an egg tray corresponding to the first carrying elements,
- a stacking device located above the receiving device at the stacking location, comprising a passage extending substantially in a horizontal plane that is suitable for transporting the platform loaded with an egg tray through it, and which is located above the receiving space, and on at least two sides extending parallel to each other is defined by movable second carrying elements, which, in use, carry edges of an egg tray corresponding to the first carrying elements, and which are configured for making the passage larger and smaller,
- a lifting device, comprising a platform extending at least substantially horizontally, carried by a carrying device, and configured for bringing an egg tray upward from the receiving device, wherein the platform has dimensions such that it can pass through the transit space and the passage,
- wherein the stacking device is configured so that an egg tray filled with eggs, brought upward from the receiving device by means of the lifting device, engages with an upper side of the egg tray on an underside of a further egg tray located in the stacking device, then causes the second carrying elements to move in such a way that the egg tray can pass through the passage, then the lifting device brings the egg tray(s) carried by the platform further upward and then the second carrying elements reduce the passage so that when the lifting device is moved downward, the egg tray is carried by the second carrying elements.

Known stacking devices of the type described above have, as second carrying elements, four strips defining a rectangle, each hinged about a horizontal axis. Two second carrying elements are fitted to, and rest on horizontal edges of the stacking location. The other two second carrying elements extend at right angles to the discharge transport direction and rest with their ends on the second carrying elements mentioned in the previous sentence. When an egg tray is brought upward by the lifting device, the lifting device pushes the four second carrying elements upward via the egg tray, so that the passage as it were hinges open on four sides. When the egg tray has passed through the passage sufficiently, the hinged strips fall under gravity down to their original position in which they rest on the edges of the stacking location. Then the lifting device moves downward and the lowest egg tray comes to rest on the four strips. A disadvantage of the known device is that the action of the second carrying elements is fault-prone and it is able to support an egg tray better. The second carrying elements arranged at right angles to the discharge transport direction cannot drop downward earlier than the second carrying elements that are carried by and rest on the edges of the stacking location, because otherwise they tilt downward completely. Furthermore, the known second carrying elements can only carry an egg tray over a narrow bottom edge of an egg tray. Egg trays are often made of bulk material, which is very fragile, and becomes very weak if it gets just a bit wet. This has a considerable effect on the carrying capacity of the thin bottom edge of the egg tray. When a stack of egg trays drops downward in the device this produces a lot of rubbish. The device must remain clean, since foodstuffs are being packed by it.

The stacking device can carry a stack of egg trays in a more reliable manner and is not very fault-prone, because the second carrying elements extend at least substantially horizontally and at right angles to the discharge transport direction and are configured to move in a horizontal plane in the transport direction away from each other and toward each other. The motion of the second carrying elements may be motor-controlled and is therefore less fault-prone than in the known device, wherein the motion of the second carrying elements depends on contact with egg trays, and on gravity. In addition, the invention offers the possibility of positioning the second carrying elements better and the design freedom thereof is greater, so that they can be designed better according to their function, A further advantageous effect is that the passage, in the direction at right angles to the discharge transport direction, only needs to be minimally wider than the corresponding dimension of an egg tray, and that in addition it can remain free from parts moving uncontrollably. Another advantageous effect is that the tray only needs to extend minimally above the horizontal plane of the upper transit space, because the carrying elements move a small distance from each other in the same horizontal plane.

If the second carrying elements are elongated, they can carry an egg tray over a relatively large length, substantially the whole length or width thereof, without needing to be bulkier.

It is preferred that in use, cups of the egg tray between the projections rest on the platform, preferably on a plane from which the projections extend upward. The projections themselves thus do not need to engage with their upper sides directly on an egg tray.

It is preferred that the second carrying elements have a longitudinal direction that extends at right angles to the discharge transport direction and a transverse direction, seen from bottom to top, extending slanting toward each other. Moreover, the slant angle preferably corresponds substantially to the slant angle of a corresponding edge of an egg tray to be carried, so that the second carrying elements can engage on the egg tray reliably over a part of or almost the whole height of the corresponding edge of the egg tray.

Sturdy and reliable engagement is further reinforced if the second carrying elements, on a side extending slanting upward, have a profile corresponding to an inner side of a lateral edge of an egg tray. The second carrying elements may comprise a strip extending, in use, transversely to the discharge transport direction, on which there are for example six lips extending slanting upward.

It is preferred that two first carrying elements extend in the supply transport direction. Thus, the respective two first carrying elements may be mounted in the extension of the supply transport device, so that an egg tray can be pushed as it were by the supply conveyor belt with the lateral edges on the respective two first carrying elements.

In a preferred embodiment, the platform has a rectangular, preferably square perimeter. Said shape corresponds to the shape of the most used five by six egg tray and can thus support it well. However, other shapes are also possible, such as a rectangular shape wherein the length differs from the width, or an octagonal or round shape.

In order to allow the platform to pass through the transit space and the passage, and in particular the first and second carrying elements, the perimeter of the platform has a length and a width that are in each case smaller than the length and width, respectively, of a five by six tray [length width tray], wherein the length and/or width are preferably less than 250 mm, more preferably less than 220 mm.

It is preferred that the platform is provided, on an upper side thereof, with upward-projecting projections, which are configured for being able to engage, in two positions turned 90 degrees about a vertical axis, with an underside of an egg tray that is to be carried. Thus, an egg tray carried on the platform can be carried, aligned more reliably and possibly better relative to an egg tray at the stacking location, and moved to the stacking location.

It is preferred that the carrying device comprises an elongated lifting element extending vertically, provided on the underside of the platform. Accordingly, by means of a lifting drive known per se, an upward and downward motion can be transmitted to the platform easily, and the weight to be transferred can be limited.

If the carrying device is configured for rotating the platform about a vertical axis, the platform can rotate an egg tray through an angle of 90 degrees. This is advantageous, since egg platforms should always be stacked turned 90 degrees relative to each other.

In a preferred embodiment, the discharge transport device comprises an endless belt, on which stacked egg trays are placed. If the stack is up to height, i.e. if the desired number of egg trays has been stacked, the rear carrier remains open and the front holder drops down with it. The stacks are led away like this.

It is preferred that the receiving device and/or the stacking location extend at least substantially in a horizontal plane. However, for example when a supply or discharge transport device is oriented slanting relative to the horizontal, the receiving device and/or the stacking location may extend at an angle relative to the horizontal.

The lifting device according to the present invention may be used in a method for stacking egg trays, comprising the steps of:
- supplying an egg tray filled with eggs to a receiving device located under a stacking location of a stacking device comprising a passage, said receiving device comprising a transit space that is suitable for moving a platform through it, and which is defined on at least two sides by first carrying elements, which, in use, carry edges of an egg tray corresponding to the first carrying elements,
- moving the egg tray upward toward the stacking device by means of a lifting device, comprising a platform extending at least substantially horizontally, carried by a carrying device, with dimensions such that it can pass through the transit space and the passage,
- transporting the platform loaded with an egg tray through the passage, wherein the passage, on at least two sides extending parallel to each other, is defined by movable second carrying elements in order to carry edges of an egg tray corresponding to the second carrying elements,
- for the egg tray filled with eggs brought upward by means of the lifting device, engaging with an upper side of the egg tray on an underside of a further egg tray located in the stacking device,
- causing the second carrying elements to move in such a way that the egg tray can pass through the passage,
- by means of the lifting device, bringing the egg tray carried by the platform further upward,
- reducing the passage by means of the second carrying elements,
- moving the lifting device downward, and transferring the egg tray to the second carrying elements, so that it is carried by the second carrying elements,
wherein the second carrying elements extend at least substantially horizontally and at right angles to the discharge transport direction and, for increasing and reducing the passage, move in a horizontal plane in the transport direction away from each other and toward each other. The invention aims to solve a problem from the prior art corresponding to the first aspect, and has advantages corresponding to the first aspect.

It is then preferred that the egg trays are stacked by means of a stacking device according to the first aspect of the invention.

The present invention will be explained in more detail hereunder, referring to an appended drawing of a preferred embodiment of a device according to the present invention. The drawing and the description do not have any limiting effect on the scope of protection of the present invention, which is only limited by the appended claims. The drawing shows:
- Fig. 1a: a perspective view of a stacking device for egg trays, in which a device according to the present invention is incorporated;
- Fig. 1b: a perspective view of the stacking device from Fig. 1a, filled with egg trays stacked and to be stacked;
- Fig. 2a: a bottom view of an egg tray;
- Fig. 2b: a bottom view of the egg tray from Fig. 2a, turned 90 degrees;
- Fig. 3a: a top view of a platform with upward-projecting projections and supporting points;
- Fig. 3b: a top view of the platform from Fig. 3a with upward-projecting projections and supporting points for carrying an egg tray turned 90 degrees;
- Fig. 3c: a top view of a platform with holes extending through the platform and supporting points;
- Fig. 3d: a top view of the platform from Fig. 3c with holes extending through the platform and supporting points for an egg tray turned 90 degrees;
- Fig. 4a: a perspective bottom view (rotated 180 degrees) of a platform with upward-projecting projections that engages on an egg tray;
- Fig. 4b: a perspective bottom view (rotated 180 degrees) of a platform with holes extending through the platform that engages on an egg tray;
- Fig. 5: a perspective view of a lifting device;
- Fig. 6a: a side view of a stack of egg trays supported by a front and a rear carrier;
- Fig. 6b: a perspective view of a carrying device for carrying egg trays, of which a carrier from Fig. 6a forms part;
- Fig. 6c: a perspective view of a part of the stacking device, in which the platform and the carriers can be seen;
- Fig. 7a-h: a side view of an egg stacker in successive steps during the stacking of egg trays; and
- Fig. 8a, b: a schematic front view of the lifting device with stacked egg trays during supply of an egg tray and during discharge of a stack of egg trays.

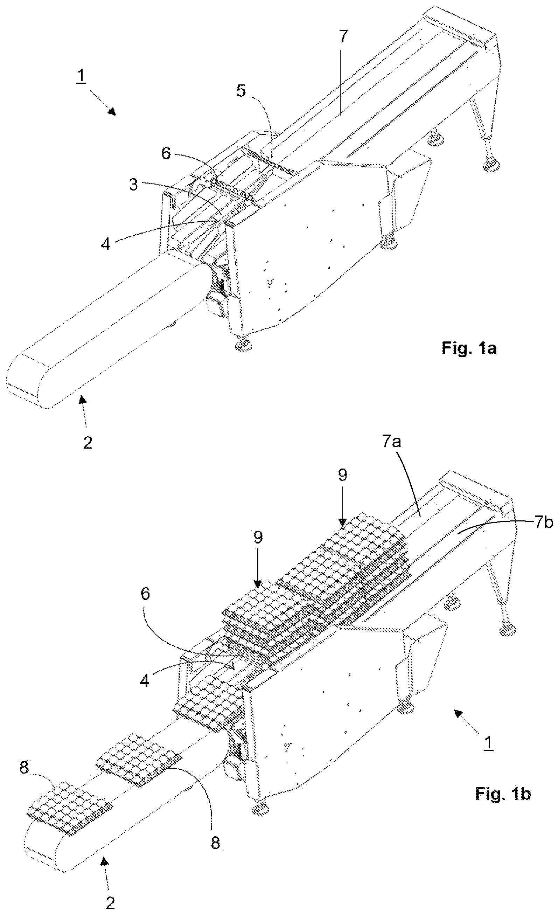

Looking now at the figures, Figs. 1a and 1b show, respectively, a perspective view of an empty stacking device 1 for egg trays, in which a device according to the present invention is incorporated, and a perspective view of the stacking device 1, filled with egg trays stacked and to be stacked 8, 9. The stacking device comprises a conveyor belt 2 as supply conveyor that forms part of a supply transport device in which, in a manner known per se, eggs are packed in egg trays. In use, egg trays to be stacked 8, in this case filled with five rows and six columns of eggs, are supplied via conveyor belt 2. The egg trays come into a receiving device 3, where they are brought upward by a lifting device 4 toward stacked egg trays 9 carried by second carrying elements in the form of a front and a rear carrier 5, 6. Egg trays 9 stacked to a desired height are deposited by the lifting device 4 on the conveyor belt 2, with which the separate egg trays are supplied, and the conveyor belt 2 transports the stacked egg trays to a discharge conveyor in the form of a conveyor belt 7, via which the stacked egg trays 9 are led away. The discharge conveyor forms part of a discharge transport device that drives the conveyor belt 7 and by which the stacked egg trays 9 may be fed for example to a palletizing device.

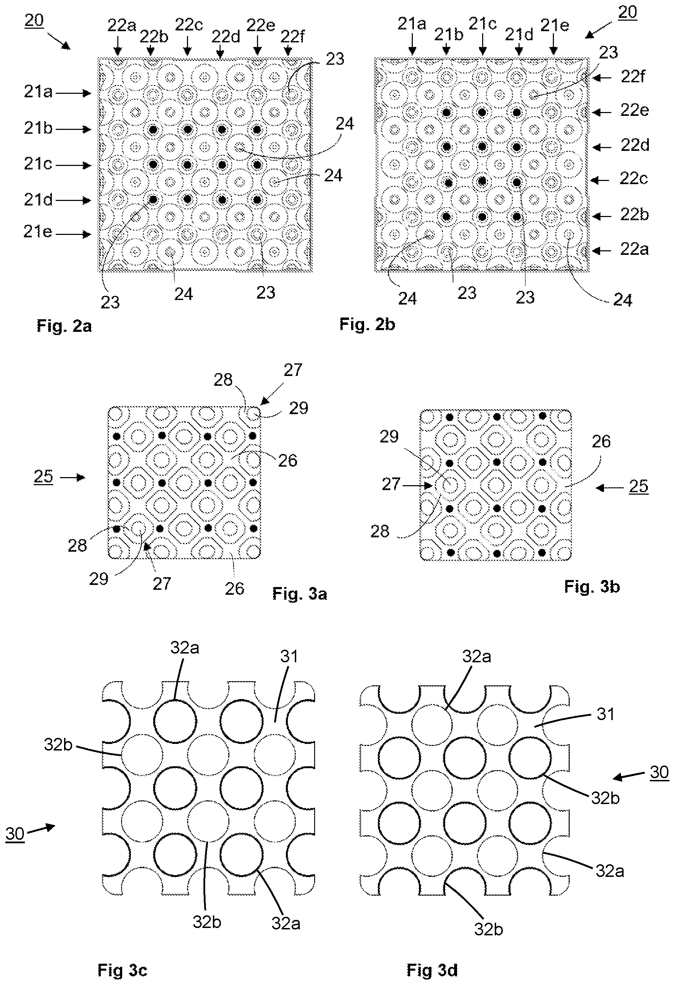

Figs. 2a and 2b show a bottom view of an egg tray 20. This egg tray has a matrix pattern of five rows 21a-21e and six columns 22a-22f with cups 23, in which eggs are placed during use. Note that, because the underside of an egg tray 20 is shown here, the eggs are located on the side of the figures turned away from the side in view. The egg tray from Fig. 2b is shown turned through 90 degrees anticlockwise relative to the egg tray from Fig. 2a. Between the cups 23 there are raised portions 24 (in these figures, away from the viewer) which in the case of stacked egg trays 9, carry cups 23 of egg tray 20 stacked thereon. When the egg tray 20 with the orientation from Fig. 2b is stacked on the egg tray 20 with the orientation from Fig. 2a, the cups 23 from Fig. 2a are supported on raised portions 24 of the egg tray 20 from Fig. 2b. It is always the cups 23 that are located both in row 21b, 21c or 21d and in column 22b, 22c, 22d or 22e, marked in Figs. 2a and 2b with a dark dot, which in use come into contact with platform 25, or 30, which is explained in more detail referring to Figs. 3a-3d. Figs. 3a and 3b show a top view of platform 25 for carrying and for raising and lowering egg trays. The flat base surface 26, and the projections 27 with their base 28 and flat upper surface 29 of the platform 25 can be seen in the top view. In Figs. 3a and 3b, contact points in the base surface, which in use come into contact with cups 23 of an egg tray, are also marked with black dots. The platform 25 is shown in Figs. 3a and 3b in the same orientation with supporting points shown for an egg tray 20 that is turned 90 degrees. In use, in the stacking device that is described in this document, the egg trays 20 are always supplied oriented identically and it is the platform 25 that, turned 90 degrees every time, engages on the next egg trays 20. The platform 25 may of course also be used with stacking devices wherein egg trays 20 are supplied turned 90 degrees every time.

Figs. 3c and 3d show a top view of platform 30 for carrying and for raising and lowering egg trays. The flat base surface 31 and the through holes 32 in the platform 30 can be seen in the top view. In Fig. 3c, the holes 32a in the base surface, which in use receive cups 23 of an egg tray 20, are marked with black lines. In Fig. 3d, the holes 32b in the base surface, which in use receive cups 23 of an egg tray 20, are marked with black lines. The platform 30 is shown in Figs. 3c and 3d in the same orientation with supporting points shown for an egg tray 20 that is turned 90 degrees. In use, in the stacking device that is described in this document, successive egg trays 20 are always supplied oriented identically and it is the platform 30 that, turned 90 degrees every time, engages on the next egg trays 20. The platform 30 may of course also be used with stacking devices wherein egg trays 20 are supplied turned 90 degrees every time. Instead of through holes, blind holes may also be provided in platform 30, which are at least formed so that cups of egg trays can be received therein.

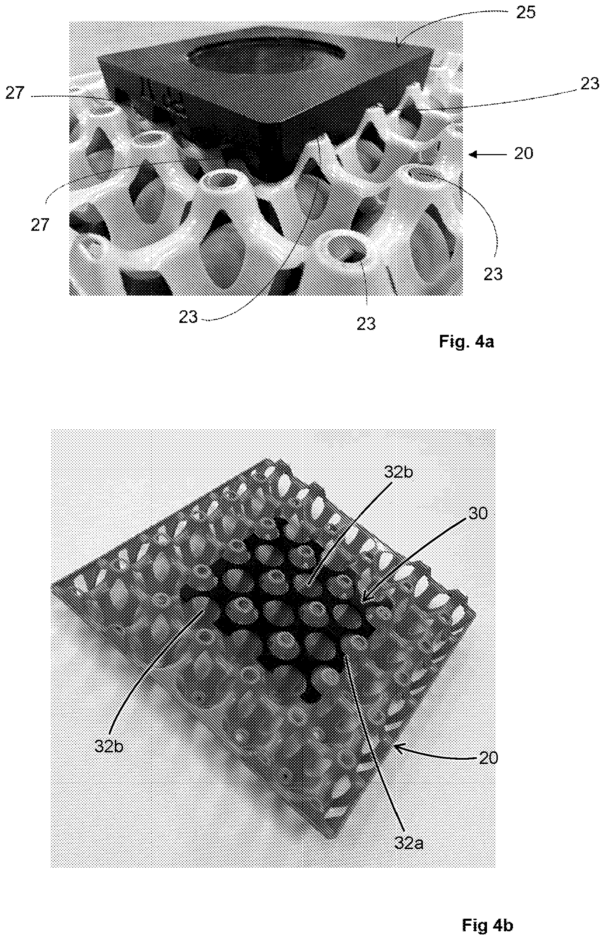

Fig. 4a shows a perspective bottom view (rotated 180 degrees) of the platform 25 that supports an egg tray 20 (because the arrangement is photographed upside down, the bottom ends of the eggs do not come into contact with the cups. It should be clear, however, that if the arrangement is reversed and the egg tray 20 is located on platform 25, the eggs rest in the cups 23). It can be seen in this figure that some cups 23 of the egg tray 20 rest on the flat base surface 26 of the platform 25. On their side, the projections 27 of the egg tray 20 relative to the platform 25 help centering (or vice versa), not only in the state in which the egg tray 20 rests completely on the platform 25, but certainly also while bringing the platform 25 under the egg tray 20. The upper surfaces of the projections 27 do not come into contact with the egg tray 20.

Fig. 4b shows a perspective bottom view of a platform 30 with holes 32a, 32b extending through the platform 30 that supports an egg tray 20. It can be seen in this figure that some cups 23 of the egg tray 20 rest on the edges of holes 32a of the platform 30. The holes 32a center the cups 23 of the egg tray 20 relative to the platform 30, not only in the state in which the egg tray 20 rests completely on the platform 30, but certainly also while bringing the platform 30 under the egg tray 23.

Since the principle of the action of a lifting device with a platform 30 with holes extending through the platform corresponds to that of a platform 25 with upward-projecting projections, the description of the action is not always repeated every time in the embodiment examples.

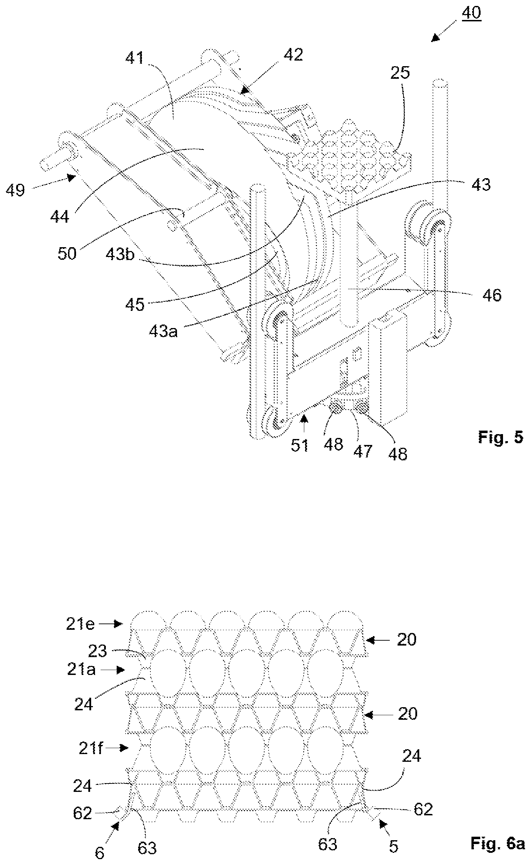

Fig. 5 shows a perspective view of a lifting device 40. The lifting device 40 has a driven guide wheel 41 rotating, or at least rotatable, about a rotation axis 50. The guide wheel 41 is of solid configuration in this embodiment example. On the periphery of the guide wheel 41 there is a running surface 42, the distance (diameter) of which to the rotation axis of the guide wheel 41 displays a jump. In the running surface 42 there is a slot 43, which extends (43a) from an abrupt increase in diameter in the peripheral direction centrally in the running surface 42 of the guide wheel 41 and is then deflected slanting (43b) toward the outside of the running surface 42. In the side surface 44 of the guide wheel 41 there is an oval groove 45.

A platform 25 is carried by a lifting element in the form of a rod 46. Underneath the rod 46 there is a cam wheel 47 extending at right angles to the rod 46, with cams 48, which project outwards in the plane of the cam wheel 47. Next to the side of the guide wheel 41 there is a rocker arm 49 with an axis 50 that extends at right angles to the plane of the guide wheel 41 into the oval groove 45. The rocker arm 49 is connected to a transmitting device 51 that carries the rod 46 with the cam wheel 47.

When guide wheel 41 rotates, the rocker arm 49 performs a rocking motion, which is converted via transmitting device 51 to a vertical up and down motion of the rod 46 with the platform 25 and the cam wheel 47. When the rod 46 and the platform 25 are at, or at least near, the highest point, the slot 43 of the guide wheel 41 engages on one of the cams 48 of the cam wheel 47. When the guide wheel 41 then turns further, the deflection 43b moves the respective cam 47 sideways, so that rod 46 with platform 25 is turned through 90 degrees. Then the guide wheel 41 turns further again, so that the rocker arm 49 moves the rod 46 down again via the transmitting device 51.

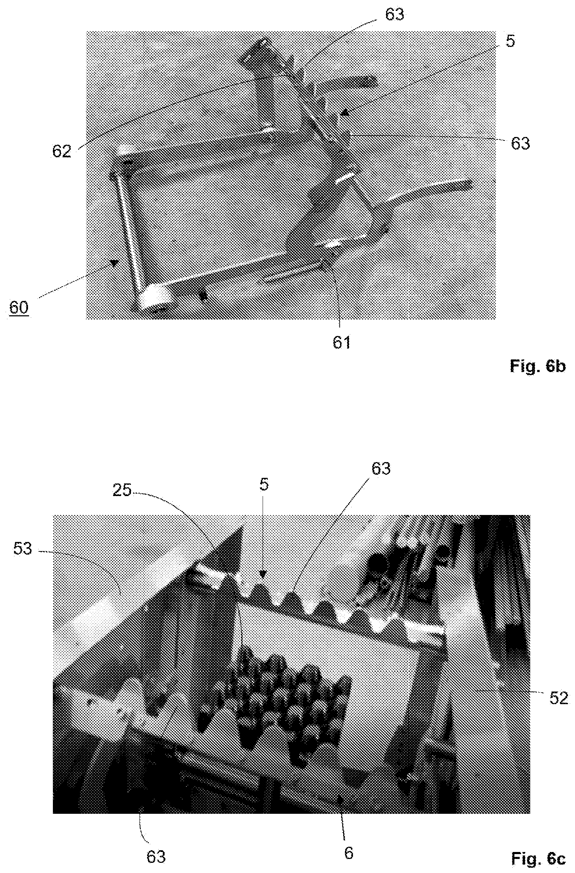

Fig. 6a shows stacked egg trays 9 in side view. It can be seen in Fig. 6 that the egg trays 20 stacked on one another are oriented relative to each other turned a quarter turn, i.e. 90 degrees every time. Of the upper egg tray 20, only the outermost row 21e of eggs can be seen. In the egg tray 20 located thereunder, the outermost column 22a of eggs can be seen. In the egg tray 20 located thereunder, the outermost row (21a, not visible in Fig. 6a) of eggs is obstructed behind the superjacent egg tray 20. In the egg tray 20 located thereunder, again an outermost column 22f of eggs is visible. The bottom egg tray is carried by a front carrier 5 and rear carrier 6, which are shown in more detail in Fig. 6b.

Fig. 6b shows a perspective view of a carrying device 60 for carrying egg trays 20. The carrying device 60 has a frame 61 that supports a carrier 5. During the steps for the stacking of egg trays 20, the frame 61 moves to and fro horizontally relative to the stacked egg trays 9, as will be explained in more detail later. It can clearly be seen that the front carrier 5 comprises a transverse beam 62 and lips 63 slanting upward, extending from the transverse beam 62. The lips 63 correspond in shape substantially with the raised portions (24, not shown in Fig. 6b) on the edge of an egg tray 20. The slanting form of the lips 63 corresponds substantially to the angle of projections (24, not shown in Fig. 6b) of an egg tray 20. The shape of the lips may be adapted to the egg trays to be carried.

Now looking again at Fig. 6a, the transverse beam 62 and the outer lip 63 of front and rear carriers 5, 6 are visible. The lips 63 engage on inner sides of raised portions 24 of the bottom egg tray 20, so that the egg tray 20 can be carried reliably by the lips 63 over a relatively large area thereof, at least in comparison with a known device wherein the bottom egg tray 20 only rests with the underside of the edge of the egg tray 20 on a horizontal strip

Fig. 6c shows a perspective view of a part of the packaging device 1, in which the platform 25 and the carriers 5, 6 are visible. The platform 25 has a smaller area than a passage that is defined by the carriers 5, 6 and by lateral edges 52, 53 of the discharge transport device 54. The shape of the lips 63 of carriers 5, 6 can also be seen in Fig. 6c.

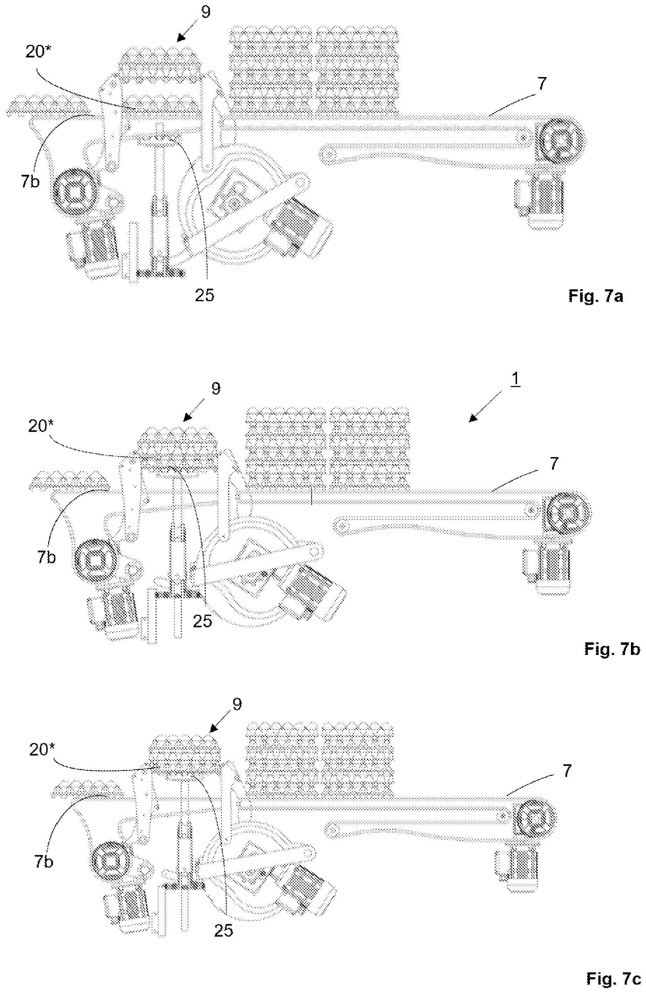

Figs. 7a-h show a side view of a packaging device 1 for eggs in successive steps during the stacking of egg trays 20. In particular, it follows the movement of egg tray 20* during the successive steps.

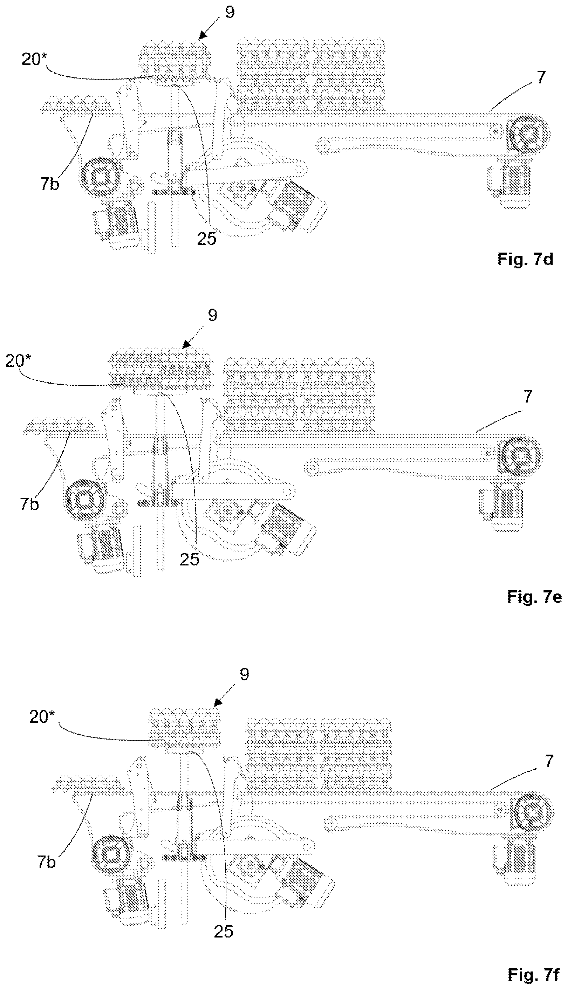

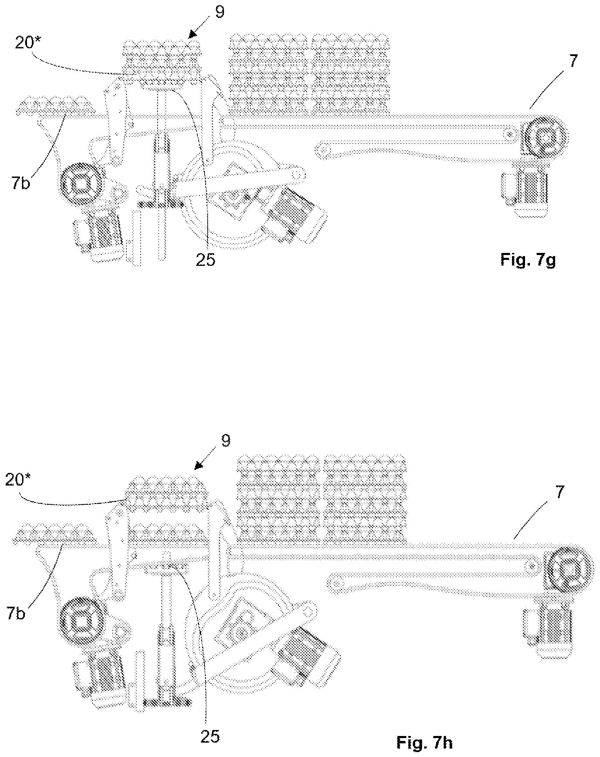

Fig. 7a shows an initial state of the packaging device 1. The egg tray filled with eggs 20* is brought via conveyor belt (not shown in Fig. 7) and a first 7a and second 7b conveyor into the receiving device 3. The egg tray 20*, just like the "next" egg tray 20 to be stacked after egg tray 20*, is oriented with the rows 21 of eggs in the longitudinal direction or transport direction of the conveyor belt. The platform 25 of the lifting device 40 is located at a distance directly under the egg tray 20*. Egg tray 20* is located directly under stacked egg trays 9. The orientation of the bottom egg tray 20 of the stacked egg trays is turned 90 degrees relative to egg platform 20*.

Fig. 7b shows the next step. Egg tray 20* is gripped by the platform 25 on the underside and brought upward, so that the egg tray 20* engages with the upper side on the "previous" egg tray 20, stacked one cycle earlier. The cups 23 of the previous egg tray are supported on the raised portions 24 of egg tray 20*. The front 5 and rear 6 carrier under the previous egg tray 20 can now be removed, because egg tray 20* and the egg trays stacked above that are carried by the platform 25.

It can be seen in Fig. 7c that the carriers 5, 6 are in fact moved aside, so that egg tray 20* can pass through a passage defined by side walls of the discharge transport device and carriers 5, 6.

It can be seen in Fig. 7d that the stacked egg trays 9, of which egg tray 20* now forms part, are brought further upward by platform 25, so that the stacked egg trays 9 and the platform 25 project above the rest of the packaging device 1.

It can be seen in Fig. 7e that platform 25 with stacked egg trays 9 thereon is rotated through an angle of 45 degrees.

In Fig. 7f, the platform 25 is rotated 90 degrees relative to Fig. 7d. Egg tray 20* is located at the bottom and is now oriented with the rows 21 of eggs at right angles to the original orientation and so also to the transport direction. Egg tray 20* now has the same orientation as the egg tray 20 which in Fig. 7a was located at the bottom of the stacked egg trays 9. Thus, the next egg tray 20 with the rows in the transport direction can be stacked under egg tray 20*.

In Fig. 7g, the carriers 5,6 are moved again to their starting position and platform 25 moves downward, wherein the carriers 5, 6 engage in raised portions 24 of egg tray 20*, so that the stacked egg trays 9 are again carried reliably.

In Fig. 7h, the state of the packaging device corresponds to the state that is shown in Fig. 7a, but the stack of egg trays is now stacked one layer higher, because egg tray 20* now forms the lowest egg tray. The cycle can now be repeated, until the desired number of egg trays 20 is stacked. Each cycle of steps 7a-7g is the same, at least with regard to the movements of the lifting device.

When the stack of egg trays has reached a desired height, after the last egg tray forms part of the stacked egg trays 9, the transverse beams 62 remain in an open state, so that the lips 63 thereof do not engage on the lowest egg tray. The platform 25 still rotates of course through 90 degrees after the last egg tray is placed under the already stacked egg trays 9. The lifting device 4 with the stacked egg trays 9 drops downward and deposits the stacked egg trays 9 on the conveyor belt, in this case the partial conveyors 7a, 7b which supplied the last (lowest) egg tray. The partial conveyors transport the stacked egg trays 9 further in the transport direction under the stacking device thereof, so that a new cycle can begin.

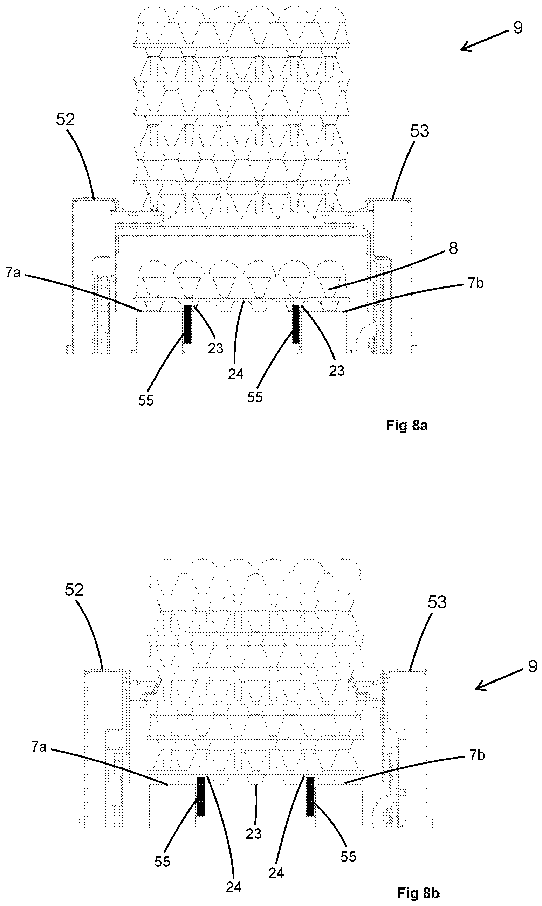

Figs. 8a and 8b show a schematic front view of the lifting device with stacked egg trays 9, supplying an egg tray 8, or discharging stacked egg trays 9, wherein the action of the vertical elements, in this case in the form of cams 55, blocks the passage for an egg tray 8, and keeps it open for stacked egg trays 9. Fig. 8a shows an egg tray 8 supplied by partial conveyors 7a, 7b. Cams 55 extend above the partial conveyors 7a, 7b, so that they are located in the conveyor track of the egg tray 8. The cams 55 block egg tray 8 because they are located in the path of respective cups 23 of the egg tray. Whereas the partial conveyors 7a, 7b run continuously, the egg tray 8 is stationary and then, as described above, is gripped by platform 25 and is brought upward.

After the stacked egg trays 9 have reached the desired height, platform 25 carries the stacked egg trays 9 downward in order to deposit the stacked egg trays 9 on the partial conveyors 7a, 7b, see Fig. 8b. Because during stacking the lowest egg tray is rotated 90 degrees every time after it has engaged with the egg tray located above it, the lowest egg tray is, when deposited on the partial conveyors 7a, 7b, in another orientation than during feed of said egg tray. This is clearly visible in Fig. 8b, wherein the cams 55, which are still in the same place, are positioned just between the cups 23 of the lowest egg tray. Because the partial conveyors 7a, 7b are still running, they engage on the stacked egg trays 9 and move them in the transport direction further. The raised portions 24 in the lowest egg tray form as it were a tunnel, so that the egg tray can pass the cams 55 without any problem. It should be made clear that the action is the same if a third partial conveyor (not shown here) also extends between the cams 55.

The present invention is described above only with reference to one embodiment example thereof. It should be made clear that many variants are conceivable within the scope of protection of the invention, which is defined by the claims presented hereunder.

It is important for a reader, and for determining the scope of protection of the device, to realize that the invention is explained in the figures and the description with the aid of an egg tray for 30 eggs (a matrix of five rows and six columns), but that egg trays with some other configuration may also be stacked with said device. This also applies to application of the method. Thus, for example trays with a matrix of four by five cups may also be processed with the same packaging device and according to one and the same method. At most, some dimensions in the device have to be adjusted. The same applies to a platform. The shape of a platform can be adapted, so long as the platform has sufficient carrying area to carry an egg tray reliably and has the pattern of projections comparable to the pattern shown and described in this document. The mutual distance between the projections may be increased or reduced in proportion as there are egg trays with a comparable increased or reduced pattern to be processed.

### List of reference numbers

- 1: packaging device for eggs
- 2: conveyor belt
- 3: receiving device
- 4: lifting device
- 5: front carrier
- 6: rear carrier
- 7: conveyor belt
- 7a, 7b: partial conveyor
- 8: egg tray to be stacked
- 9: stacked egg trays
- 20: egg tray
- 21a-e: rows of egg cups
- 22a-f: columns of egg cups
- 23: cup of egg tray
- 24: raised portion of egg tray
- 25: platform
- 26: base surface
- 27: projection
- 28: base
- 29: upper surface
- 40: lifting device
- 41: guide wheel
- 42: running surface of guide wheel 41
- 43: slot
- 43a: right portion of slot 43
- 43b: deflection of slot 43
- 44: side surface
- 45: groove
- 46: rod
- 47: cam wheel
- 48: cam
- 49: rocker arm
- 50: axis of rocker arm
- 51: transmitting device
- 52: lateral edge of discharge transport device
- 53: lateral edge of discharge transport device
- 54: discharge transport device
- 55: cam
- 60: carrying device
- 61: frame of the carrying device
- 62: transverse beam
- 63: lip

## Claims

1. A lifting device (4) configured for the carrying and upward displacement of a square egg tray (20) with a tray length and a tray width and provided with a pattern of a tray matrix pattern of cups (23) arranged in five rows (21a-e) and six columns (22a-f) for receiving one separate egg in each recess, wherein a mutual center distance of two adjacent cups (23) in a row (21a-e) is equal to a mutual center distance of two adjacent cups (23) in a column (22a-f),
the device comprising a platform (25) extending substantially horizontally with a platform length less than a length and a platform width less than a width of an egg tray (20) that is carried or at least is to be carried,
**characterized in that** said platform (25) either
a) on an upper side thereof, is provided with upward-projecting projections (27) that are configured for engaging between the cups (23) of the egg tray on an underside of an egg tray (20) that is carried or at least is to be carried, wherein a projection (27) has a shape of a truncated cone or a truncated pyramid, or
b) is provided with holes having a diameter of more than 17 mm extending through the platform (25) or with blind holes, said holes extending through the platform (25) or blind holes each being configured for receiving a recess of an egg tray (20) that is carried or at least is to be carried,
wherein the projections (27), or the holes, are provided in a platform matrix pattern, wherein projections (27) or holes are provided according to a portion of said egg tray (20) to be carried corresponding to the dimensions of said pattern of cups (23) of said egg tray to be carried, wherein midway between each two adjacent rows (21a-e) of projections (27) or holes of the tray matrix pattern, an extra row (21a-e) of projections (27) or holes is provided on, or in the platform (25), which is staggered relative to the two adjacent rows (21a-e) by half of said center distance.

2. The lifting device (4) as claimed in claim 1, wherein the lifting device (4) is configured to rotate the platform about a vertical axis.

3. The lifting device (4) as claimed in claim 1 wherein cups (23) of the egg tray rest in use between the projections (27) on the platform (25), preferably on a plane from which the projections (27) extend upward.

4. The lifting device (4) as claimed in claim 1, 2 or 3, wherein the perimeter of the platform (25) has a length and a width, each being less than 400 mm, wherein the length and/or width of the platform (25) is preferably less than 250 mm, and more preferably is less than 220 mm.

5. The lifting device (4) as claimed in one or more of the preceding claims, wherein the platform (25) is provided, on an upper side thereof, with upward-projecting projections (27) or with holes extending through the platform (25) or with blind holes, which are configured for being able to engage, in two positions turned 90 degrees about a vertical axis, with an underside of an egg tray (20) that is to be carried, and/or wherein the platform is rectangular, preferably square.

6. The lifting device (4) with projections (27) as claimed in one or more of the preceding claims, wherein the center distance is between 40 and 60 mm, preferably between 42 and 55 mm, particularly preferably 48.3 mm and/or wherein a projection (27) has a flat top surface that is horizontal during use.

7. The lifting device (4) with projections (27) as claimed in one or more of the preceding claims, wherein a projection (27) has a base from which it projects above the platform (25), wherein the base of a projection (27) has a diameter from 20 to 40 mm, preferably from 25 to 35 mm, particularly of 28-32 mm, wherein preferably the base of the projection has an oval shape.

8. The lifting device (4) with projections (27) as claimed in claim 7, wherein a projection (27) extends from the base over a height, wherein the height of a projection (27) is between 7.5 and 15 mm, preferably between 10 and 14 mm, particularly preferably is 13.75 mm.

9. The lifting device (4) with holes as claimed in one or more of the preceding claims, wherein the holes have a round cross section, or at least are point-symmetric relative to a center of the respective hole, and/or wherein the holes have a diameter of more than 25 mm, preferably more than 30 or 35 mm.

10. The lifting device (4) as claimed in one or more of the preceding claims, wherein the lifting device (4) comprises an elongated lifting element extending vertically, provided on the underside of the platform (25).

11. Combination of the lifting device (4) as claimed in one or more of the preceding claims and an egg tray (20), with the egg tray (20) on the lifting device (4) with a matrix pattern of X rows (21a-e) and Y cups(23), in each of which an egg is placed, wherein X is preferably 3, 4 or 5 and wherein Y is preferably 4, 5, or 6.

12. The combination as claimed in claim 11, wherein a recess is formed as a depression with substantially the shape of an inverted truncated pyramid or an inverted dome.

13. The combination as claimed in one or more of the preceding claims 11-12, wherein projections (27) of the platform (25) are in contact with cups (23) of the egg tray.

14. The combination as claimed in one or more of the preceding claims 11 or 13, wherein cups (23) of the egg tray are supported on the platform (25) in use on a base surface of the platform (25) located between the projections (27) of the platform(25), or wherein material between the cups (23) of the egg tray in use is supported on material of the platform (25) between the holes.

15. The lifting device (4) as claimed in one or more of the preceding claims 1-10, wherein the base surface of the platform (25) is flat, and preferably extends horizontally.

16. A stacking device (1) for stacking substantially square egg trays, the stacking device (1) comprising a lifting device according to claim 1.

## Patentansprüche

1. Hebevorrichtung (4), ausgelegt zum Tragen und Aufwärtsbewegen einer quadratischen Eiertragplatte (20) mit einer Plattenlänge und einer Plattenbreite und versehen mit einem Muster einer Plattenmatrix von Mulden (23), angeordnet in fünf Reihen (21a-e) und sechs Spalten (22a-f) zur Aufnahme je eines separaten Eies in jeder Vertiefung, wobei ein gegenseitiger Mittenabstand von zwei benachbarten Mulden (23) in einer Reihe (21a-e) gleich einem gegenseitigen Mittenabstand von zwei benachbarten Mulden (23) in einer Spalte (22a-f) ist,
wobei die Vorrichtung eine Plattform (25) umfasst, die sich im Wesentlichen horizontal erstreckt, mit einer Plattformlänge, die kleiner als eine Länge, und einer Plattformbreite, die kleiner als eine Breite einer Eiertragplatte (20) ist, die getragen wird oder zumindest getragen werden soll,
**dadurch gekennzeichnet, dass** die Plattform (25) entweder
a) auf einer Oberseite davon mit nach oben vorstehenden Vorsprüngen (27) versehen ist, die dazu ausgelegt sind, zwischen die Mulden (23) der Eiertragplatte auf einer Unterseite einer Eiertragplatte (20) einzugreifen, die getragen wird oder zumindest getragen werden soll, wobei ein Vorsprung (27) eine Form eines Kegelstumpfs oder eines Pyramidenstumpfs aufweist, oder
b) mit Löchern mit einem Durchmesser von mehr als 17 mm versehen ist, die sich durch die Plattform (25) erstrecken, oder mit Sacklöchern, wobei die Löcher, die sich durch die Plattform (25) erstrecken, oder Sacklöcher jeweils dazu ausgelegt sind, eine Vertiefung einer Eiertragplatte (20) aufzunehmen, die getragen wird oder zumindest getragen werden soll,
wobei die Vorsprünge (27) oder die Löcher in einem Plattformmatrixmuster vorgesehen sind, wobei Vorsprünge (27) oder Löcher gemäß einem Teil der zu tragenden Eiertragplatte (20) vorgesehen sind, die den Abmessungen des Musters von Mulden (23) der zu tragenden Eiertragplatte entsprechen, wobei in der Mitte zwischen je zwei benachbarten Reihen (21a-e) von Vorsprüngen (27) oder Löchern des Plattenmatrixmusters eine zusätzliche Reihe (21a-e) von Vorsprüngen (27) oder Löchern auf oder in der Plattform (25) vorgesehen ist, die relativ zu den zwei benachbarten Reihen (21a-e) um die Hälfte des Mittenabstands versetzt ist.

2. Hebevorrichtung (4) nach Anspruch 1, wobei die Hebevorrichtung (4) dazu ausgelegt ist, die Plattform um eine vertikale Achse zu drehen.

3. Hebevorrichtung (4) nach Anspruch 1, wobei Mulden (23) der Eiertragplatte im Gebrauch zwischen den Vorsprüngen (27) auf der Plattform (25), vorzugsweise auf einer Ebene, von der sich die Vorsprünge (27) nach oben erstrecken, ruhen.

4. Hebevorrichtung (4) nach Anspruch 1, 2 oder 3, wobei der Umfang der Plattform (25) eine Länge und eine Breite aufweist, die jeweils kleiner als 400 mm sind, wobei die Länge und/oder die Breite der Plattform (25) vorzugsweise kleiner als 250 mm und besonders bevorzugt kleiner als 220 mm ist.

5. Hebevorrichtung (4) nach einem oder mehreren der vorhergehenden Ansprüche, wobei die Plattform (25) auf einer Oberseite davon mit nach oben vorstehenden Vorsprüngen (27) oder mit Löchern, die sich durch die Plattform (25) erstrecken, oder mit Sacklöchern versehen ist, die dazu ausgelegt sind, in zwei um 90 Grad um eine vertikale Achse gedrehten Positionen mit einer Unterseite einer zu tragenden Eiertragplatte (20) in Eingriff zu kommen, und/oder wobei die Plattform rechteckig, vorzugsweise quadratisch ist.

6. Hebevorrichtung (4) mit Vorsprüngen (27) nach einem oder mehreren der vorhergehenden Ansprüche, wobei der Mittenabstand zwischen 40 und 60 mm, vorzugsweise zwischen 42 und 55 mm, besonders bevorzugt 48,3 mm beträgt und/oder wobei ein Vorsprung (27) eine ebene obere Fläche aufweist, die während des Gebrauchs horizontal ist.

7. Hebevorrichtung (4) mit Vorsprüngen (27) nach einem oder mehreren der vorhergehenden Ansprüche, wobei ein Vorsprung (27) eine Basis aufweist, von der er sich über die Plattform (25) erhebt, wobei die Basis eines Vorsprungs (27) einen Durchmesser von 20 bis 40 mm, vorzugsweise von 25 bis 35 mm, besonders von 28-32 mm aufweist, wobei vorzugsweise die Basis des Vorsprungs eine ovale Form hat.

8. Hebevorrichtung (4) mit Vorsprüngen (27) nach Anspruch 7, wobei sich ein Vorsprung (27) von der Basis über eine Höhe erstreckt, wobei die Höhe eines Vorsprungs (27) zwischen 7,5 und 15 mm, vorzugsweise zwischen 10 und 14 mm, besonders bevorzugt 13,75 mm beträgt.

9. Hebevorrichtung (4) mit Löchern nach einem oder mehreren der vorhergehenden Ansprüche, wobei die Löcher einen runden Querschnitt aufweisen oder zumindest punktsymmetrisch in Bezug auf eine Mitte des jeweiligen Lochs sind und/oder wobei die Löcher einen Durchmesser von mehr als 25 mm, vorzugsweise mehr als 30 oder 35 mm aufweisen.

10. Hebevorrichtung (4) nach einem oder mehreren der vorhergehenden Ansprüche, wobei die Hebevorrichtung (4) ein längliches Hebeelement umfasst, das sich vertikal erstreckt und auf der Unterseite der Plattform (25) vorgesehen ist.

11. Kombination der Hebevorrichtung (4) nach einem oder mehreren der vorhergehenden Ansprüche und einer Eiertragplatte (20), wobei die Eiertragplatte (20) auf der Hebevorrichtung (4) mit einem Matrixmuster von X Reihen (21a-e) und Y Mulden (23) angeordnet ist, in denen jeweils ein Ei platziert ist, wobei X vorzugsweise 3, 4 oder 5 ist und wobei Y vorzugsweise 4, 5 oder 6 ist.

12. Kombination nach Anspruch 11, wobei eine Vertiefung als eine Mulde mit im Wesentlichen der Form eines umgekehrten Pyramidenstumpfes oder einer umgekehrten Kuppel ausgebildet ist.

13. Kombination nach einem oder mehreren der vorhergehenden Ansprüche 11-12, wobei Vorsprünge (27) der Plattform (25) mit Mulden (23) der Eiertragplatte in Kontakt sind.

14. Kombination nach einem oder mehreren der vorhergehenden Ansprüche 11 oder 13, wobei Mulden (23) der Eiertragplatte im Gebrauch auf der Plattform (25) auf einer Grundfläche der Plattform (25) zwischen den Vorsprüngen (27) der Plattform (25) aufliegen oder wobei Material zwischen den Mulden (23) der Eiertragplatte im Gebrauch auf Material der Plattform (25) zwischen den Löchern aufliegt.

15. Hebevorrichtung (4) nach einem oder mehreren der vorhergehenden Ansprüche 1-10, wobei die Grundfläche der Plattform (25) eben ist und sich vorzugsweise horizontal erstreckt.

16. Stapelvorrichtung (1) zum Stapeln im Wesentlichen quadratischer Eiertragplatten, wobei die Stapelvorrichtung (1) eine Hebevorrichtung nach Anspruch 1 umfasst.

## Revendications

1. Dispositif de levage (4) configuré pour le transport et le déplacement vers le haut d'un plateau à œufs carré (20) ayant une longueur de plateau et une largeur de plateau et pourvu d'un motif matriciel de plateau de coupelles (23) agencées en cinq rangées (21a-e) et six colonnes (22a-f) pour recevoir un œuf séparé dans chaque évidement, dans lequel une distance inter-centres de deux coupelles adjacentes (23) dans une rangée (21a-e) est égale à une distance inter-centres de deux coupelles adjacentes (23) dans une colonne (22a-f),
le dispositif comprenant une plateforme (25) s'étendant sensiblement horizontalement avec une longueur de plateforme inférieure à une longueur et une largeur de plateforme inférieure à une largeur d'un plateau à œufs (20) qui est transporté ou au moins doit être transporté,
**caractérisé en ce que** ladite plateforme (25) soit
a) sur un côté supérieur de celle-ci, est pourvue de saillies vers le haut (27) qui sont configurées pour s'engager entre les coupelles (23) du plateau à œufs sur un côté inférieur d'un plateau à œufs (20) qui est transporté ou au moins doit être transporté, où une saillie (27) a une forme de cône tronqué ou de pyramide tronquée, soit
b) est pourvue de trous ayant un diamètre de plus de 17 mm s'étendant à travers la plateforme (25) ou de trous borgnes, lesdits trous s'étendant à travers la plateforme (25) ou trous borgnes étant chacun configurés pour recevoir un évidement d'un plateau à œufs (20) qui est transporté ou au moins doit être transporté,
dans lequel les saillies (27), ou les trous, sont prévu(e)s selon un motif matriciel de plateforme, dans lequel les saillies (27) ou les trous sont prévu(e)s selon une partie dudit plateau à œufs (20) à transporter correspondant aux dimensions dudit motif de coupelles (23) dudit plateau à œufs à transporter, dans lequel à mi-chemin entre chaque paire de rangées adjacentes (21a-e) de saillies (27) ou de trous du motif matriciel de plateau, une rangée supplémentaire (21a-e) de saillies (27) ou de trous est prévue sur, ou dans la plateforme (25), qui est décalée par rapport à la paire de rangées adjacentes (21a-e) de la moitié de ladite distance inter-centres.

2. Dispositif de levage (4) tel que revendiqué dans la revendication 1, dans lequel le dispositif de levage (4) est configuré pour faire tourner la plateforme autour d'un axe vertical.

3. Dispositif de levage (4) tel que revendiqué dans la revendication 1, dans lequel les coupelles (23) du plateau à œufs reposent en utilisation entre les saillies (27) sur la plateforme (25), de préférence sur un plan à partir duquel les saillies (27) s'étendent vers le haut.

4. Dispositif de levage (4) tel que revendiqué dans la revendication 1, 2 ou 3, dans lequel le périmètre de la plateforme (25) a une longueur et une largeur, chacune étant inférieure à 400 mm, dans lequel la longueur et/ou la largeur de la plateforme (25) est de préférence inférieure à 250 mm, et plus préférablement est inférieure à 220 mm.

5. Dispositif de levage (4) tel que revendiqué dans une ou plusieurs des revendications précédentes, dans lequel la plateforme (25) est pourvue, sur un côté supérieur de celle-ci, de saillies dépassant vers le haut (27) ou de trous s'étendant à travers la plateforme (25) ou de trous borgnes, qui sont configuré(e)s pour pouvoir s'engager, dans deux positions tournées à 90 degrés autour d'un axe vertical, avec un côté inférieur d'un plateau à œufs (20) qui doit être transporté, et/ou dans lequel la plateforme est rectangulaire, de préférence carrée.

6. Dispositif de levage (4) à saillies (27) tel que revendiqué dans une ou plusieurs des revendications précédentes, dans lequel la distance inter-centres est comprise entre 40 et 60 mm, de préférence entre 42 et 55 mm, de manière particulièrement préférée est de 48,3 mm et/ou dans lequel une saillie (27) a une surface supérieure plate qui est horizontale pendant l'utilisation.

7. Dispositif de levage (4) à saillies (27) tel que revendiqué dans une ou plusieurs des revendications précédentes, dans lequel une saillie (27) a une base à partir de laquelle elle dépasse au-dessus de la plateforme (25), dans lequel la base d'une saillie (27) a un diamètre de 20 à 40 mm, de préférence de 25 à 35 mm, en particulier de 28 à 32 mm, dans lequel de préférence la base de la saillie a une forme ovale.

8. Dispositif de levage (4) à saillies (27) tel que revendiqué dans la revendication 7, dans lequel une saillie (27) s'étend à partir de la base sur une hauteur, dans lequel la hauteur d'une saillie (27) est comprise entre 7,5 et 15 mm, de préférence entre 10 et 14 mm, de manière particulièrement préférée est de 13,75 mm.

9. Dispositif de levage (4) à trous tel que revendiqué dans une ou plusieurs des revendications précédentes, dans lequel les trous ont une section transversale ronde, ou présentent au moins une symétrie centrale par rapport à un centre du trou respectif, et/ou dans lequel les trous ont un diamètre supérieur à 25 mm, de préférence supérieur à 30 ou 35 mm.

10. Dispositif de levage (4) tel que revendiqué dans une ou plusieurs des revendications précédentes, dans lequel le dispositif de levage (4) comprend un élément de levage allongé s'étendant verticalement, agencé sur le côté inférieur de la plateforme (25).

11. Combinaison du dispositif de levage (4) tel que revendiqué dans une ou plusieurs des revendications précédentes et d'un plateau à œufs (20), le plateau à œufs (20) étant sur le dispositif de levage (4) avec un motif matriciel de X rangées (21a-e) et de Y coupelles (23), dans chacune desquelles est placé un œuf, dans laquelle X est de préférence 3, 4 ou 5 et Y est de préférence 4, 5 ou 6.

12. Combinaison telle que revendiquée dans la revendication 11, dans laquelle un évidement se présente sous la forme d'une dépression ayant sensiblement la forme d'une pyramide tronquée inversée ou d'un dôme inversé.

13. Combinaison telle que revendiquée dans une ou plusieurs des revendications précédentes 11 et 12, dans laquelle des saillies (27) de la plateforme (25) sont en contact avec des coupelles (23) du plateau à œufs.

14. Combinaison telle que revendiquée dans une ou plusieurs des revendications 11 ou 13 précédentes, dans laquelle les coupelles (23) du plateau à œufs sont supportées sur la plateforme (25) lors de l'utilisation sur une surface de base de la plateforme (25) située entre les saillies (27) de la plateforme (25), ou dans laquelle le matériau entre les coupelles (23) du plateau à œufs lors de l'utilisation est supporté sur le matériau de la plateforme (25) entre les trous.

15. Dispositif de levage (4) tel que revendiqué dans une ou plusieurs des revendications 1 à 10 précédentes, dans lequel la surface de base de la plateforme (25) est plate, et de préférence s'étend horizontalement.

16. Dispositif d'empilage (1) pour empiler des plateaux à œufs sensiblement carrés, le dispositif d'empilage (1) comprenant un dispositif de levage selon la revendication 1.
